# EUROPÄISCHE PATENTSCHRIFT

(11) **EP 1 968 831 B1**
(45) Veröffentlichungstag und Bekanntmachung des Hinweises auf die Patenterteilung: **27.10.2010**
(21) Anmeldenummer: 06841082.8
(22) Anmeldetag: 21.12.2006
(51) Int. Cl.: B60T 8/32, B60T 8/88, B60T 13/68, B60T 8/34

(54) **DRUCKMITTELBETÄTIGTES BREMSSYSTEM MIT REDUNDANTER STEUERUNG DER BREMSAKTUATOREN**
BRAKING SYSTEM OPERATED BY PRESSURE MEDIUM WITH REDUNDANT CONTROL OF THE BRAKE ACTUATORS
SYSTÈME DE FREINAGE COMMANDÉ PAR UN AGENT DE PRESSION ET DOTÉ D'UNE COMMANDE REDONDANTE DES ACTIONNEURS DE FREINAGE

(30) Priorität: 29.12.2005 DE 102005062907
(43) Veröffentlichungstag der Anmeldung: 17.09.2008
(73) Patentinhaber: KNORR-BREMSE Systeme für Nutzfahrzeuge GmbH, 80809 München (DE)
(72) Erfinder: FRANK, Péter, H-1112 Budapest (HU); PALKOVICS, Laszlo, H-1111 Budapest (HU); SZELL, Péter, H-1163 Budapest (HU)
(74) Vertreter: Mattusch, Gundula
(86) Internationale Anmeldenummer: PCT/EP2006/012359
(87) Internationale Veröffentlichungsnummer: WO 2007/079946

(56) Entgegenhaltungen:
- EP-A- 1 544 072
- EP-A1- 0 481 227
- EP-A2- 0 738 640
- DE-A1- 10 245 916
- GB-A- 2 345 276
- US-A- 5 004 300

## Beschreibung

### Stand der Technik

Die Erfindung betrifft ein druckmittelbetätigtes Bremssystem, welches mindestens einen ersten Bremssteuerkreis und einen zweiten Bremssteuerkreis umfasst, sowie mindestens zwei Bremskrafterzeugungseinrichtungen, von welchen jede von einem Bremsaktuator mit geregeltem Bremsdruck versorgt wird, gemäß dem Oberbegriff von Anspruch 1.

Ein druckmittelbetätigtes Bremssystem ist aus der DE 103 57 373 A1 bekannt. Es besteht aus zwei unabhängigen Bremssteuerkreisen, von welchen jeder Bremssteuerkreis die Bremsen einer oder mehrerer Achsen des Fahrzeugs steuert. Die Bremssteuerkreise beinhalten elektronische Steuergeräte zur Ansteuerung von radnah angeordneten Bremsaktuatoren. Bei dem bekannten Bremssystem sind folglich zwei oder mehr Bremssteuerkreise vorhanden, weiche Steuerbefehle generieren und diese in die Bremsaktuatoren einsteuern. Gemäß eines Ausführungsbeispiels der oben genannten Schrift steuert ein zentrales Steuergerät die Bremsaktuatoren aller Räder des Fahrzeugs, zusätzlich ist ein autonomes Steuergerät vorhanden, welches die Radbremsen der Vorderachse steuert. Dies bedeutet, dass bei Auftreten eines Fehlers im zentralen Steuergerät die Radbremsen der Hinterachse nicht mehr eingebremst werden können.

Ein gattungsgemäßes Bremssystem ist in der US 5,004,300 beschrieben. Bei diesem bremsdruckgeregelten Bremssystem sind die Steuerkammem von zwei, jeweils einem Bremskreis zugeordneten Relaisventilen durch eine Verbindungsleitung miteinander verbunden, um eine von einer Störung eines Bremskreises herrührende Druckdifferenz in den Steuerkammem der Relaisventile zu begrenzen. In der Verbindungsleitung ist ein Trennventil-angeordnet, welches im Falle einer Aktivierung des Anti-Blockiersystems in einem der Bremskreise schließt. Das bekannte geregelte Bremssystem ist elektrisch gesteuert. Falls daher die Elektrik des einen Bremskreises ausfällt, erhält zwar dieser Bremskreis den Steuerdruck des anderen Bremskreises in die Steuerkammer seines Relaisventils über die Verbindungsleitung eingesteuert, jedoch kann aus diesem Steuerdruck dann kein geregelter Bremsdruck mehr in dem gestörten Bremskreis erzeugt werden, weil dort mit der Elektrik auch die Druckregelung ausgefallen ist.

### Aufgabe der Erfindung

Die Aufgabe der Erfindung besteht darin, ein druckmittelbetätigtes Bremssystem der eingangs erwähnten Art derart weiterzubilden, dass auch bei Ausfall der Regelung in einem Bremskreis in diesem weiterhin geregelt gebremst werden kann.

Diese Aufgabe wird gemäß der Erfindung durch die Merkmale von Anspruch 1 gelöst.

### Vorteile der Erfindung

Die Erfindung verwirklicht erstmalig ein druckmittelbetätigtes Bremssystem, insbesondere für Nutzfahrzeuge, welches mindestens einen ersten Bremssteuerkreis und einen zweiten Bremssteuerkreis umfasst sowie mindestens zwei Bremskrafterzeugungseinrichtungen, von welchen jede von einem eigenen Bremsaktuator mit geregeltem Bremsdruck versorgt wird, der wenigstens folgendes beinhaltet:
a) einen ersten Anschluss zum Einsteuem von Steuersignalen,
b) einen zweiten Anschluss zum Einsteuem von Druckmittel als Steuerdruck,
c) einen dritten, mit der zugeordneten Bremskrafterzeugungseinhchtung in Verbindung stehenden Anschluss zum Aussteuern von geregeltem Bremsdruck, wobei
d) der zweite Anschluss des einen Bremsaktuators, welcher über seinen ersten Anschluss vom ersten. Bremssteuerkreis angesteuert wird, zum Aussteuern von geregeltem Bremsdruck aus dem anderen Bremsaktuator als Steuerdruck in den einen Bremsaktuator an den dritten Anschluss des anderen Bremsaktuators angeschlossen ist, welcher über seinen ersten Anschluss vom zweiten Bremssteuerkreis angesteuert wird.

Insbesondere für den bevorzugten Fall, dass das Bremssystem durch ein elektro-pneumatisches Bremssystem gebildet wird, ist diese Anordnung unempfindlicher gegenüber elektrischen oder elektronischen Fehlern. Denn wenn ein Steuerkreis oder ein Bremsaktuator einen elektrischen Fehler aufweist, kann das Steuergerät des verbleibenden funktionsfähigen Steuerkreises den oder die verbleibenden funktionsfähigen Bremsaktuatoren weiterhin ansteuern. Ein verbleibender funktionsfähiger Bremsaktuator kann dann über die Verbindung, welche sich zwischen dem zweiten Anschluss und dem dritten Anschluss erstreckt, geregelten Bremsdruck als Steuerdruck zu dem den Fehler aufweisenden Bremsaktuator weiterleiten, damit in diesem ein wiederum geregelter Bremsdruck für die zugeordnete Bremskrafterzeugungseinrichtung erzeugt wird. Somit können auch im Fehlerfall sämtliche Bremsaktuatoren aktiviert und auch sämtliche Radbremsen des Fahrzeugs geregelt eingebremst werden.

Die Erfindung ist nicht auf elektro-pneumatische Bremseinrichtungen beschränkt, sondern kann für jegliche Art von druckmittelbetätigten Bremseinrichtungen verwendet werden, so auch für hydraulische, elektro-hydraulische oder auch rein pneumatische Bremseinrichtungen.

Genaueres geht aus der nachfolgenden Beschreibung hervor.

### Zeichnungen

Nachstehend ist ein Ausführungsbeispiel der Erfindung in der Zeichnung dar gestellt und in der nachfolgenden Beschreibung näher erläutert. In der Zeichnung zeigt
- Fig. 1: ein Blockdiagramm eines Fahrzeugsbremssystems;
- Fig. 2: ein Blockdiagramm einer Aktuatoreinrichtung des Fahrzeugbrems- systems von Fig. 1;
- Fig. 3: ein Blockdiagramm einer weiteren Aktuatoreinrichtung;
- Fig. 4: ein Blockdiagramm einer Aktuatoreinrichtung gemäß der Erfindung.

### Beschreibung des Ausführungsbeispiels

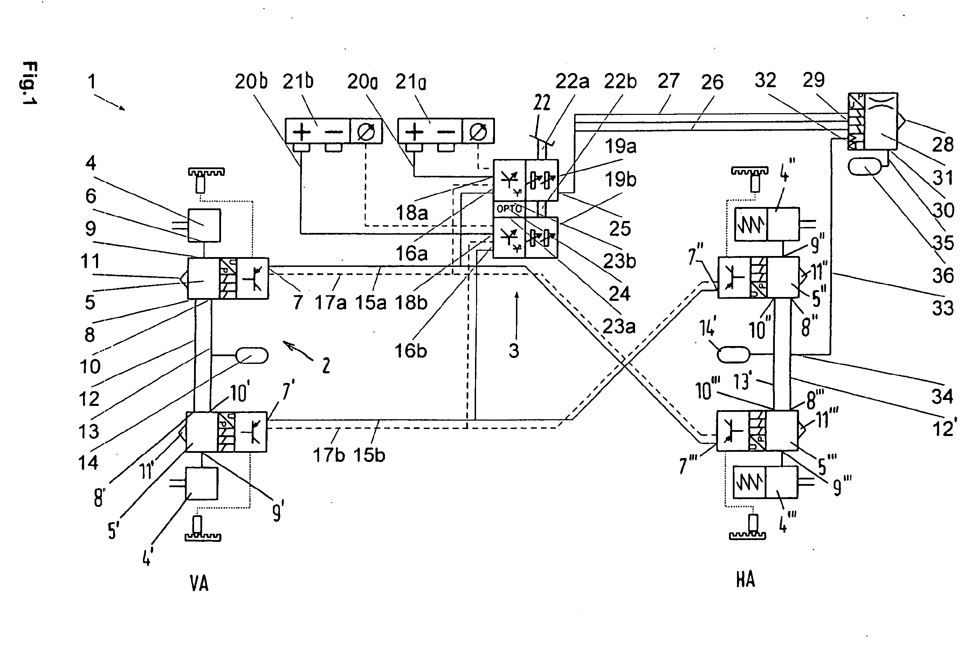

Die in Fig.1 gezeigte, bevorzugte Ausführungsform einer Fahrzeugbremseinrichtung 1 nutzt Druckluft als Druckmedium und ist für ein zweiachsiges Nutzfahrzeug mit Anhängerbetrieb vorgesehen.

Die vorzugsweise elektro-pneumatische Bremseinrichtung 1 umfasst eine elektronische Steuereinrichtung 3 zur Steuerung eines pneumatischen Systems 2, insbesondere von Bremsaktuatoren 5, 5', 5", 5"', welche radbezogene, pneumatische Bremszylinder 4, 4', 4", 4"' betätigen. An der Vorderachse VA und der Hinterachse HA kann jedem Bremszylinder 4, 4', 4", 4"' ein eigener Bremsaktuator 5, 5', 5", 5"' zugeordnet sein, welcher vorzugsweise ein Druckregelmodul ist. Ein solches Druckregelmodul 5, 5', 5", 5"' setzt die über einen ersten Anschluss 7, 7', 7", 7"' eingesteuerten Bremsdruckanforderungssignale, welche einen Bremsdruck-Sollwert repräsentieren, in pneumatische Bremsdrücke um. Die Umsetzung erfolgt mit Proportionalmagnetventilen oder mit einer Einlass/Auslassventilkombination 47, 48. Ein Drucksensor misst den ausgesteuerten Bremsdruck und steuert ein entsprechendes Signal in ein elektronisches Steuergerät 19a, 19b ein, wodurch eine Druckregelung verwirklicht wird. Exemplarisch für die drei anderen Bremsaktuatoren 5', 5" und 5"' sollen im folgenden die Verhältnisse am Bremsaktuator 5 des rechten Vorderrades erläutert werden.

Der diesem Bremsaktuator 5 zugeordnete Bremszylinder 4 ist über eine pneumatische Leitung 6 an einen dritten Anschluss 9 des Bremsaktuators 5 angeschlossen. Dieser wird an seinem vierten Anschluss 10 über eine an einem Druckluftvorrat 14 angeschlossene Druckleitung 13 mit Druckluft versorgt. Ein zweiter Anschluss 8 des Bremsaktuators 5 des rechten Rades VA ist über eine Druckleitung 12 an den zweiten Anschluss 8' des anderen Bremsaktuators 5' dieser Achse VA angeschlossen, welcher dem linken Vorderrad zugeordnet und wiederum über seinen dritten Anschluss 9' an den ihm zugeordneten Bremszylinder 4' angekoppelt ist. Die Bremsaktuatoren 5 und 5' der Vorderachse werden aus einem Druckluftvorrat 14 über die Leitung 13 mit Druckluft versorgt.

Beispielsweise jeder der Bremsaktuatoren 5, 5' der Vorderachse VA verfügt über eine Entlüftung 11, welche mit der Atmosphäre in Verbindung steht. Der dem rechten Vorderrad zugeordnete Bremsaktuator 5 beinhaltet bevorzugt eine elektropneumatische Ventileinheit mit einem ersten Anschluss 7, bei welchem es sich um einen elektrischen Anschluss handelt und welcher über eine Leitung 17a eines ersten elektrischen Steuerkreises 15a an die elektronische Steuereinrichtung 3 angeschlossen ist. Der erste elektrischen Steuerkreis 15a verfügt über ein erstes elektronisches Steuergerät 19a mit einem Ausgang 16a, an welchen die elektrische Leitung 17a angeschlossen ist. Über einen Versorgungsanschluss 18a und eine Leitung 20a ist das erste elektronische Steuergerät 19a an eine erste elektrische Spannungsquelle 21 a angeschlossen.

In gleicher Weise handelt es sich bei dem dem linken Vorderrad zugeordneten Bremsaktuator 5 um eine elektropneumatische Ventileinheit mit einem ersten elektrischen Anschluss 7, welcher über eine elektrische Leitung 17b an einen zweiten elektrischen Steuerkreis 15b angeschlossen ist. Der dem linken Vorderrad zugeordnete Bremsaktuator 5' ist bevorzugt identisch aufgebaut wie der dem rechten Vorderrad zugeordnete Bremsaktuator 5 und verfügt demzufolge über identische Anschlüsse und Verbindungen zu über- und untergeordneten Baueinheiten.

Der zweite elektrische Steuerkreis 15b verfügt über ein zweites elektronisches Steuergerät 19b mit einem Ausgang 16b, welcher an die elektrische Leitung 17b angeschlossen ist. Im weiteren steht das zweite elektronische Steuergerät 19b mit einem Versorgungseingang 18b über eine Leitung 20b mit einer zweiten Spannungsversorgung 21b in Verbindung. Sowohl das erste elektronische Steuergerät 19a und das zweite elektronische Steuergerät 19b haben einen eigenen Bremsanforderungssignaleingang 22a bzw. 22b, welcher an ein elektronisches Bremspedal 22 angeschlossen ist, wodurch eine brake-by-wire-Bremseinrichtung 1 verwirklicht ist, bei welcher die elektronische Steuereinrichtung 3 redundant aufgebaut ist. Denn das elektronische Steuergerät 19a und das elektronische Steuergerät 19b sind an ihren Anschlüssen 23a bzw. 23b über eine opto-elektrische Verbindung 24 miteinander gekoppelt. Alternativ kann die Verbindung auch rein elektrisch ausgebildet sein, beispielsweise durch elektrische Kabel.

Weiterhin ist an die Leitung 17a der erste Anschluss 7"' des dem linken Hinterrad zugeordneten Bremsaktuators 5"' angeschlossen, dessen dritter Anschluss 9"' mit dem diesem Rad zugeordneten Bremszylinder 4"' in Verbindung steht. Nicht zuletzt ist der erste Anschluss 7" des dem rechten Hinterrad zugeordneten Bremsaktuators 5" an die Leitung 17b angeschlossen, wobei der dritte Anschluss 9" dieses Bremsaktuators 5" mit dem zugeordneten Bremszylinder 4" verbunden ist. Die beiden der Hinterachse HA zugeordneten Bremsaktuatoren 5" und 5"' werden an ihren vierten Anschlüssen 10" und 10"' über eine Leitung 13' ebenfalls von einem gemeinsamen Druckluftspeicher 14' mit Druckluft versorgt.

Die zweiten Anschlüsse 8" und 8"' der der Hinterachse HA zugeordneten Bremsaktuatoren 5" und 5"' sind ebenfalls mittels einer Druckleitung 12' miteinander gekoppelt, welche mittels Verbindungsleitungen 34 und 33 mit einem zweiten Anschluss 32 eines Anhängerbremsaktuators 31 in Verbindung steht. Ein dritter Anschluss 30 des Anhängerbremsaktuators 31 steht über eine Leitung 35 mit einem Druckluftreservoir 36 in Verbindung, welches durch einen nicht gezeigten Luftkompressor mit Druckluft versorgt wird. Ein erster Anschluss 29 des Anhängerbremsaktuators 31 ist über Leitungen 26 und 27 mit einem Anhänger-Eingangs-/Ausgangsanschluss 25 des ersten elektronischen Steuergeräts 19a verbunden. Ein vierter Anschluss 28 des Anhängerbremsaktuators 31 wird durch eine Entlüftung gebildet.

Insgesamt sind daher die Bremsaktuatoren 5, 5', 5", 5"' von zwei Fahrzeugachsen VA, HA mit ihren ersten Anschlüssen 7, T, 7", 7"' an den ersten Bremssteuerkreis 15a und den zweiten Bremssteuerkreis 15b vorzugsweise diagonal angeschlossen.

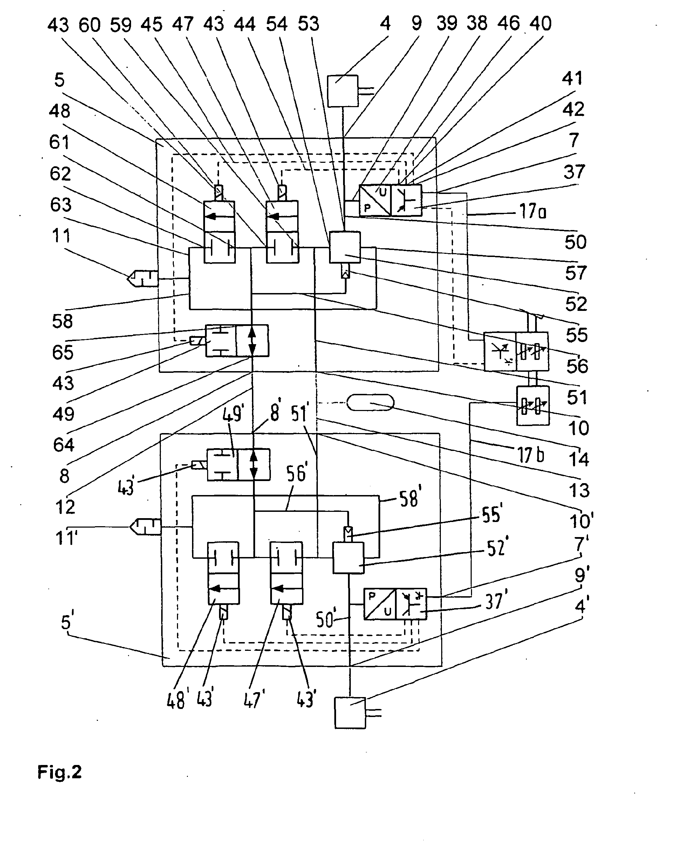

Wie insbesondere aus Fig.2 hervorgeht, sind die Bremsaktuatoren 5 und 5' der Vorderachse VA jeweils identisch aufgebaute elektropneumatische Ventileinheiten mit jeweils einer internen elektronischen Steuereinheit 37, 37', welche über einen elektronischen Eingangsanschluss verfügt, der mit dem ersten Anschluss 7 des Bremsaktuators 5 verbunden ist. Weiterhin ist ein solcher Bremsaktuator 5 mit einem Drucksensor 38 mit einem Eingangsanschluss 39 versehen, welcher mit dem dritten Anschluss 9 des Bremsaktuators 5 in Verbindung steht. Ein erster elektrischer Ausgangsanschluss 40 der internen elektronischen Steuereinheit 37 ist mittels einer Leitung 44 mit einem Elektromagneten 43 eines ersten elektromagnetischen Ventils oder Einlassventils 47, ein zweiter elektrischer Ausgangsanschluss 41 über eine Leitung 45 mit dem Elektromagneten 43 eines zweiten elektropneumatischen Ventils oder Auslassventils 48 und ein dritter elektrischer Ausgangsanschluss 42 über eine Leitung 46 mit dem Elektromagneten 43 eines dritten elektro-pneumatischen Ventils 49 verbunden.

Der dritte Anschluss 9 und der vierte Anschluss 10 eines solchen Bremsaktuators 5 sind mittels pneumatischer Leitungen 50 und 51 über ein Relaisventil 52 mit Anschlüssen 53 und 54 miteinander koppelbar, dessen Steueranschluss 55 über eine pneumatische Leitung 56 mit einem Ausgangsanschluss 60 des Einlassventils 47 verbunden ist. Ein Ausgangsanschluss 57 des Relaisventils 52 ist mittels einer Leitung 58 an die in die Atmosphäre entlüftenden Entlüftung 11 angeschlossen. Weiterhin ist ein Eingangsanschluss 59 des Einlassventils 47 mit dem vierten Anschluss 10 des Bremsaktuators 5, ein Eingangsanschluss 61 des Auslassventils 48 mit dem Ausgangsanschluss 60 des Einlassventils 47 und ein Ausgangsanschluss 62 des Auslassventils 48 mittels einer Leitung 63 mit der Entlüftung 11 verbunden.

Ein erster pneumatischer Anschluss 64 des dritten elektro-pneumatischen Ventils 49 ist mit dem zweiten Anschluss 8 des Bremsaktuators 5 und sein zweiter pneumatischer Anschluss 65 mittels der Leitung 56 mit dem Ausgangsanschluss 60 des Einlassventils 47 und mit dem Steueranschluss 55 des Relaisventils 52 und dem Eingangsanschluss 61 des Auslassventils 48 verbunden.

Bei dem Einlassventil 47, dem Auslassventil 48 und dem dritten elektropneumatischen Ventil 49 handelt es sich bevorzugt um 2/2-Wegemagnetventile, wobei das Einlassventil 47 und das Auslassventil 48 bestromt durchschalten und entstromt sperren, während das dritte elektropneumatische Ventil 49 bestromt sperrt und entstromt durchschaltet.

Im in Fig.2 gezeigten entstromten Zustand befinden sich folglich das Einlassventil 47 und das Auslassventil 48 in Sperrposition, während das dritte elektropneumatische Ventil 49 durchschaltet.

Zum Zuspannen der Bremse wird das Einlassventil 47 bestromt und durchgeschaltet, während das entstromte Auslassventil 48 und das bestromte dritte elektropneumatische Ventil 49 geschlossen sind.

Zum Lösen der Bremse wird das Auslassventil 48 bestromt und durchgeschaltet, während das entstromte Einlassventil 47 und das bestromte dritte elektropneumatische Ventil 49 sich in geschlossener Stellung befinden.

Falls einer oder beide elektrische Steuerkreise 15a, 15b eine Störung aufweisen, was durch die elektrischen Steuergeräte 19a und 19b detektierbar ist, wird das Auslassventil 48 oder die Auslassventile 48 des oder der von der Störung betroffenen Bremsaktuatoren 5 durch Entstromung geschlossen und das jeweilige dritte elektro-pneumatische Ventil 49 entstromt und damit durchgeschaltet.

Vor diesem Hintergrund ist die Funktionsweise des Bremssystems 1 wie folgt: Die elektronische Steuereinrichtung 3 des Nutzfahrzeugs steuert die Versorgungssysteme vor dem Fahrzeugstart, nämlich den Luftdruck in den Druckluftvorräten 14, 14' und 36 und die Spannung der Spannungsquellen 21 a und 21 b über die Leitungen 20a und 20b durch das elektronische Steuergerät 19a und das elektronische Steuergerät 19b. Falls genügend Energie vorhanden ist, kann der Fahrer das Bremspedal 22 betätigen und damit Bremsanforderungssignale in das elektronische Steuergerät 19a und gleichzeitig in das elektronische Steuergerät 19b einsteuern. Beide Steuergeräte 19a und 19b führen die gleichen Funktionen aus und überwachen einander gegenseitig mittels der opto-elektrischen Verbindung 24. Beide Steuergeräte 19a und 19b senden auch die gleichen Bremsanforderungssignale aus ihren Ausgangsanschlüssen 16a und 16b über die Leitungen 17a und 17b zu den ersten Anschlüssen 7, 7', 7" und 7"' der Bremsaktuatoren 5, 5', 5" und 5"'. Folglich werden der erste elektronische Steuerkreis 15a und der zweite elektronische Steuerkreis 15b in gleicher Weise parallel aktiviert.

Wenn beispielsweise der Bremsaktuator 5 des rechten Vorderrades an seinem ersten Anschluss 7 ein über die Leitung 17a des ersten elektrischen Steuerkreises 15a herangeführtes elektrisches Bremsanforderungssignal empfängt, wird dieses an seine interne Steuereinheit 37 weitergeleitet. Dieses Signal steuert den Luftdruck in der Leitung 50 und falls dieser geringer ist als der angeforderte Sollbremsdruck bestromt die interne Steuereinheit 37 über ihren Ausgangsanschluss 40 den Elektromagneten 43 des Einlassventils 47, so dass dessen Eingangsanschluss 59 und Ausgangsanschluss 60 miteinander kommunizieren und Steuerdruckluft vom Druckluftvorrat 14 über den vierten Anschluss 10 und die Leitungen 51, 56 an den Steueranschluss 55 des Relaisventils 52 gelangt. Abhängig von diesem Steuerdruck steuert das Relaisventil 52 einen vom Vorratsdruck im Druckluftvorrat 14 abgeleiteten Bremsdruck in die Leitung 50 und von dort über den dritten Anschluss 9 in den Bremszylinder 4 ein. Auf ein elektrisches Bremsanforderungssignal am ersten Anschluss 7 des Bremsaktuators 5 hin steht folglich ein entsprechender Bremsdruck in der Leitung 50 zur Einspeisung in den Bremszylinder 4 an. Der Elektromagnet 43 des dritten elektro-pneumatischen Ventils 49 wird bestromt gehalten, weshalb es in Sperrstellung bleibt. Die gleichen Vorgänge laufen auch beim Bremsaktuator 5 des linken Vorderrades ab, der vom zweiten elektrischen Steuerkreis 15b parallel angesteuert wird.

Falls das elektrische Bremsanforderungssignal am ersten Anschluss 7 des Bremsaktuators 5 des rechten Vorderrades und/oder die Spannungsversorgung des Bremsaktuators 5 jedoch unterbrochen wird, was beispielsweise auf einen Fehler im ersten elektrischen Steuerkreis 15a zurückzuführen ist, sind die Elektromagneten 43 des Auslassventils 48 und des Einlassventils 47 entstromt und sperren folglich. Hingegen schaltet bei entstromtem Elektromagnet 43 das dritte elektro-pneumatische Ventil 49 in Durchschaltstellung. In diesem entströmten Zustand ist der Bremsaktuator 5 des rechten Vorderrades in Fig.2 gezeigt.

Ein Fehler im ersten elektrischen Steuerkreis 15a wird mittels der optoelektrischen Verbindung 24 vom elektronischen Steuergerät 19b des zweiten elektrischen Steuerkreises 15b detektiert, welches daraufhin ein entsprechendes Störsignal als Steuersignal über die Leitung 17b in den ersten Anschluss 7' des dem linken Vorderrad zugeordneten Bremsaktuators 5' einsteuert, genauer in dessen interne Steuereinheit 37', welche daraufhin den Elektromagneten 43' des dritten elektro-pneumatischen Ventils 49' entstromt, woraufhin dieses durchschaltet. Bei Vorliegen eines neuerlichen Bremsanforderungssignals und des Störsignals am ersten Anschluss 7' des dem linken Vorderrad zugeordneten Bremsaktuators 5' bestromt dessen interne Steuereinheit 37' über die Leitung 44' den Elektromagneten 43' des Einlassventils 47', welches daraufhin Vorratsdruck aus dem Druckvorrat 14 in die Leitung 56' einsteuert. Da das dritte elektro-pneumatische Ventil 49' sich durch Entstromung in durchgeschalteter Stellung befindet, kann der Vorratsdruck auch in der Leitung 12 anstehen.

Bei einem Fehler im ersten elektrischen Steuerkreis 15a kann folglich Druckluft, vorzugsweise Druckluft unter Vorratsdruck von dem dem zweiten elektrischen Steuerkreis 15b und dem linken Vorderrad zugeordneten Bremsaktuator 5' über dessen durchgeschaltetes drittes elektro-pneumatisches Ventil 49' und die Leitung 12 in den zweiten Anschluss 8 des dem ersten elektrischen Steuerkreis 15a und dem rechten Vorderrad zugeordneten Bremsaktuators 5 eingespeist und über das durchgeschaltete dritte elektro-pneumatische Ventil 49 und die Leitung 56 in den Steueranschluss 55 dessen Relaisventils 52 eingesteuert werden, welches abhängig von diesem Druck über die Leitung 50 den Bremszylinder 4 des rechten Vorderrades belüftend mit Bremsdruck versorgt.

Zur Entlüftung des dem von der Störung betroffenen Bremsaktuator 5 zugeordneten Bremszylinders 4 wird auf ein entsprechendes Signal am ersten Anschluss 7' hin das Einlassventil 47' des Bremsaktuators 5' geschlossen und das Auslassventil 49' durchgeschaltet, woraufhin der Druck in der Leitung 56 des Bremsaktuators 5 sinkt und das Relaisventil 52 den Bremszylinder 4 über die Leitung 58 entlüftet.

Auf die beschriebene Weise kann daher ohne elektrische Spannungsversorgung und ohne elektrisches Bremsanforderungssignal im ersten elektrischen Steuerkreis 15a der diesem Steuerkreis 15a zugeordnete Bremsaktuator 5 trotzdem den Bremszylinder 4 ent- bzw: belüften. In analoger Weise ist dies auch umgekehrt möglich, d.h. bei einer Störung im zweiten elektrischen Steuerkreis 15b kann der diesem Steuerkreis 15b zugeordnete Bremsaktuator 5' durch vom Bremsaktuator 5 des ersten elektrischen Steuerkreises 15a ausgesteuerte Drucksignale den Bremszylinder 4' be- oder entlüften.

In gleicher Weise laufen die Funktionen im Anhängerbremsaktuator 31 ab, wenn in der sich zwischen den zweiten Anschlüssen 8" und 8"' der der Hinterachse HA zugeordneten Bremsaktuatoren 5" und 5"' erstreckenden Leitung 12' und in der Leitung 33 Druckluft ansteht, welche den Anhängerbremsaktuator 31 auch ohne Vorhandensein eines elektrischen Bremsanforderungssignals steuert.

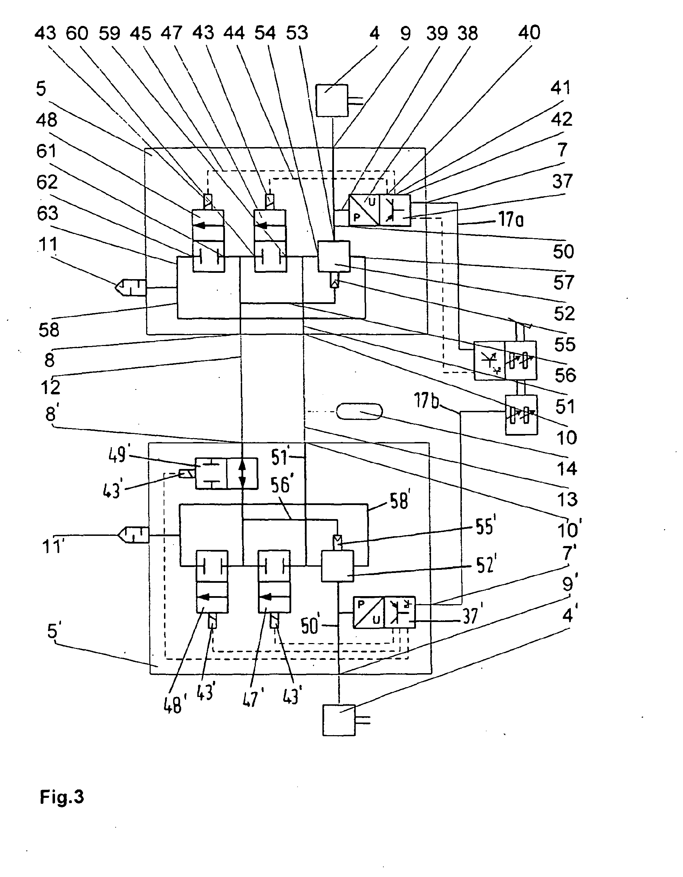

Bei dem weiteren Ausführungsbeispiel nach Fig.3 sind die gegenüber dem vorhergehenden Beispiel gleichbleibenden und gleichwirkenden Teile durch die gleichen Bezugszahlen gekennzeichnet. Im Unterschied zur vorangehenden Ausführungsform sind jedoch zwei unterschiedliche Bremsaktuatoren 5 und 5' derselben Fahrzeugachse, beispielsweise der Vorderachse VA zugeordnet.

Hierbei ist der beispielsweise dem linken Vorderrad zugeordnete Bremsaktuator 5' identisch mit den Bremsaktuatoren 5 und 5' gemäß dem vorangehenden Ausführungsbeispiel, während der andere Bremsaktuator 5 nur zwei elektropneumatische Ventile 47, 48 aufweist, nämlich ein Einlassventil 47 und ein Auslassventil 48. Weiterhin ist in dem Bremsaktuator 5 von Fig. 3 auch eine interne Steuereinheit 37 mit einem elektrischen Eingangsanschluss 7 vorhanden, welche der erste Anschluss des Bremsaktuators 5 ist, sowie mit einem Drucksensoreingangsanschluss 39, welcher mit einem dritten Anschluss 9 des Bremsaktuators 5 verbunden ist, mit einem ersten elektrischen Ausgangsanschluss 40, welcher mit dem Elektromagneten 43 des Einlassventils 47 in Verbindung steht und einem zweiten elektrischen Ausgangsanschluss 41, welcher an einen Elektromagneten 43 des Auslassventils 48 angeschlossen ist.

Darüber hinaus ist auch ein Relaisventil 52 vorhanden, dessen Steueranschluss 55 durch eine pneumatische Leitung 56 mit dem Einlassventil 47 und mit dem Auslassventil 48 gekoppelt ist, während ein Ausgangsanschluss 57 des Relaisventils 52 mittels einer Leitung 58 an eine Entlüftung 11 angeschlossen ist. Ein dritter Anschluss 53 des Relaisventils 52 steht mit dem dritten Anschluss 9 des Bremsaktuators 5 in Verbindung, während ein vierter Anschluss 54 des Relaisventils 52 mit dem Eingangsanschluss 59 des Einlassventils 47 gekoppelt ist.

Nicht zuletzt ist ein Ausgangsanschluss 60 des Einlassventils 47 mit dem zweiten Anschluss 8 des Bremsaktuators 5 und mit dem Eingangsanschluss 61 des Auslassventils 48 und ein Ausgangsanschluss 62 des Auslassventils 48 mittels einer Leitung 63 mit der Entlüftung 11 verbunden.

Im vorliegenden Fall ist der Bremsaktuator 5 mit seinen beiden elektropneumatischen Ventilen 47 und 48 über seinen ersten Anschluss 7 an den ersten Steuerkreis 15a angeschlossen, während der Bremsaktuator 5' mit den drei elektro-pneumatischen Ventilen 47', 48' und 49' dem zweiten Steuerkreis 15b zugeordnet ist. Darüber hinaus sind die jeweils zweiten Anschlüsse 8, 8' der Bremsaktuatoren 5 und 5' mittels der Leitung 12 miteinander gekoppelt. Die hier beschriebene weitere Ausführungsform funktioniert wie die vorangehend beschriebene Ausführungsform, wenn kein Fehler auftritt.

Bei Auftreten eines Fehlers im ersten Steuerkreis 15a, welcher über die opto-elektrische Verbindung 24 vom elektronischen Steuergerät 19b detektiert wird, sendet das elektronische Steuergerät 19b ein Fehlersignal über die Leitung 17b an den ersten Anschluss 7' des Bremsaktuators 5', genauer an dessen interne Steuereinrichtung 37', welche daraufhin den Elektromagneten 43' des dritten elektro-pneumatischen Ventils 48' nicht bestromt, woraufhin dieses nicht geschlossen sondern in Durchgangsstellung geschaltet wird. Bei einem neuerlichen Bremsanforderungssignal und einem Fehlersignal am ersten Anschluss 7' veranlasst das interne Steuergerät 37' über die Leitung 44' eine Bestromung des Elektromagneten 43' des Einlassventils 47', während der Elektromagnet 43' des dritten elektro-pneumatischen Ventils 49' nicht bestromt wird, welches folglich in durchgeschalteter Stellung verbleibt.

Dadurch kann dem zweiten Anschluss 8 des Bremsaktuators 5, welcher dem ersten Steuerkreis 15a zugeordnet ist, vom Druckluftvorrat 14 stammende und durch den Bremsaktuator 5' geführte Druckluft über die Leitung 12 zugeführt werden: Diese Druckluft füllt die Leitung 56 und erreicht den Steueranschluss 55 des Relaisventils 52, welches daraufhin die Anschlüsse 53 und 54 miteinander koppelt, so dass durch die Leitungen 50 und 51 vom Druckluftvorrat 14 abgeleitete Druckluft in den Bremszylinder 4 einströmt. Auf diese Weise können die Bremsaktuatoren 5 und 5' durch Signale des zweiten Steuerkreises 15b in beide Bremszylindern 4, 4' Bremsdruck einsteuern, ohne dass der erste Steuerkreis 15a funktioniert und elektrische Bremsanforderungssignale am ersten Anschluss 7 des Bremsaktuators 5 anstehen.

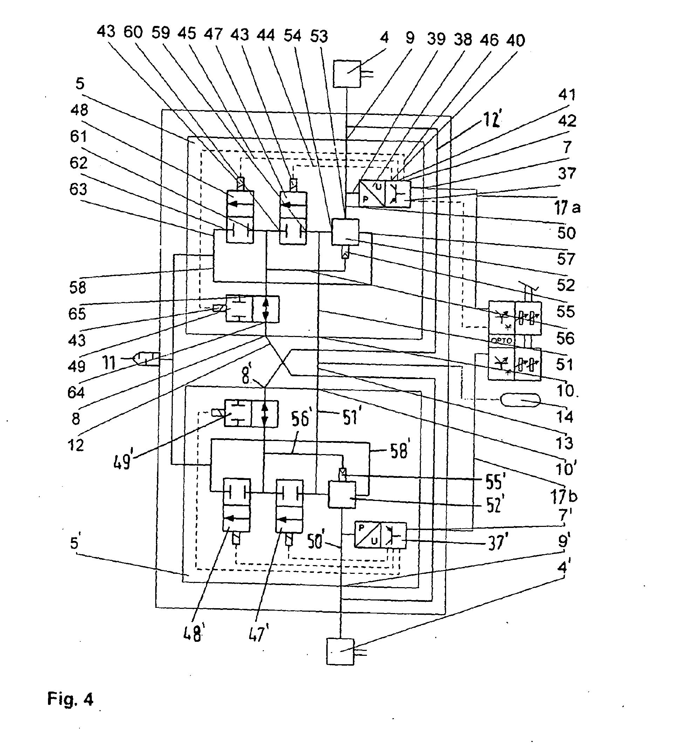

Ein Ausführungsbeispiel gemäß der Erfindung ist in Fig. 4 gezeigt. Der Vorderachse VA sind hierbei zwei Bremsaktuatoren 5 und 5' zugeordnet, welche im wesentlichen den Bremsaktuatoren 5 und 5' des eingangs geschriebenen Ausführungsbeispiels gemäß Fig. 2 entsprechen. Im Unterschied zu diesem sind die beiden Bremsaktuatoren 5 und 5' zu einem Zweikanaldruckregelmodul als Baueinheit zusammengefasst, d.h. ihre Bauteile und Bauelemente sind in einem gemeinsamen Gehäuse integriert oder zwei getrennte Gehäuse sind aneinander angeflanscht. Insbesondere ist ein gemeinsame Entlüftung 11 vorgesehen.

Wie zuvor ist auch hier erste Anschluss 7 des einen, beispielsweise dem rechten Vorderrad zugeordneten Bremsaktuators 5 an den ersten Steuerkreis 15a, der erste Anschluss 7' des anderen, beispielsweise dem linken Vorderrad zugeordneten Bremsaktuators 5' an den zweiten Steuerkreis 15b angeschlossen. Der zweite Anschluss 8 des einen Bremsaktuators 5, welcher dem ersten Steuerkreis 15a zugeordnet ist, steht über eine Leitung 12 mit dem dritten Anschluss 9' des anderen Bremsaktuators 5' in Verbindung, welcher dem zweiten Steuerkreis 15b zugeordnet ist. Umgekehrt ist der zweite Anschluss 8' des anderen Bremsaktuators 5', welcher dem zweiten Steuerkreis 15b zugeordnet ist, über eine Leitung 12' mit dem dritten Anschluss 9 des einen Bremsaktuators 5 verbunden, wobei eine solche Verbindung direkt oder indirekt über weitere Leitungen ausgebildet sein kann.

Falls ein Fehler im zweiten Steuerkreis 15b auftritt, welcher dann über die opto-elektrische Verbindung 24 von dem elektrischen Steuergerät 19a des ersten elektronischen Steuerkreises 15a detektiert wird, sendet das elektronische Steuergerät 19a ein Störsignal als Steuersignal via Leitung 17a an den ersten Anschluss 7 des Bremsaktuators 5 und genauer an dessen interne Steuereinheit 37, welche daraufhin den Elektromagneten 43 des dritten elektropneumatischen Ventils 49 entstromt, welches daraufhin durchgeschaltet wird. Insgesamt werden alle elektro-pneumatischen Ventile 47', 48' und 49' des Bremsaktuators 5', welcher dem zweiten elektronischen Steuerkreis 15b zugeordnet ist, aufgrund des Fehlers nicht bestromt und befinden sich dadurch in der in Fig. 4 gezeigten Stellung.

Bei Vorliegen eines neuerlichen Bremsanforderungssignals und des Störsignals am ersten Anschluss 7 des Bremsaktuators 5, der dem ungestörten ersten Steuerkreis 15a zugeordnet ist, wird der Elektromagnet 43 des Einlassventils 47 über die Leitung 44 bestromt, wodurch Druckluft über den dritten Anschluss 9 in den Bremszylinder 4 eingesteuert wird. Da der dritte Anschluss 9 des einen Bremsaktuators 5 über die Leitung 12' mit dem zweiten Anschluss 8' des anderen Bremsaktuators 5' in Verbindung steht, steht dieser Druck auch an diesem zweiten Anschluss 8' an. Das durchgeschaltete dritte Ventil 49' das anderen Bremsaktuators 5' sorgt dafür, dass die Druckluft als Steuerdruck über die Leitung 56' an den Steueranschluss 55' des Relaisventils 52' gelangt, welches daraufhin seine Anschlüsse 53' und 54' koppelt, um abhängig von diesem Steuerdruck Druckluft aus dem Druckluftvorrat 14 über die Leitungen 50', 51' in den Bremszylinder 4' einzusteuem. Wie auch in den vorangehenden Ausführungsbeispielen erläutert, werden beide Bremszylinder 4 und 4' be- bzw. entlüftet, ohne dass der zweite Steuerkreis 15b funktionsfähig ist.

Die elektronischen Steuergeräte 19a, 19b können abweichend von Fig.1 ganz oder teilweise auch in die Bremsaktuatoren 5, 5', 5", 5"' integriert sein. Nicht zuletzt können auch zwei Bremsaktuatoren 5, 5', 5", 5"' mit ihren dritten Anschlüssen 9, 9', 9", 9"' an Bremszylinder 4, 4', 4", 4"' verschiedener Achsen angeschlossen sein.

### Bezugszahlentabelle

- 1: Bremseinrichtung
- 3: Steuereinrichtung
- 4: Bremszylinder
- 5: Bremsaktuator
- 6: Leitung
- 7: erster Anschluss
- 8: zweiter Anschluss
- 9: dritter Anschluss
- 10: vierter Anschluss
- 11: Entlüftung
- 12: Druckleitung
- 13: Druckleitung
- 14: Druckluftvorrat
- 15a: erster Steuerkreis
- 15b: zweiter Steuerkreis
- 16a: Ausgang
- 16b: Ausgang
- 17a: Leitung
- 17b: Leitung
- 18a: Versorgungsanschluss
- 18b: Versorgungseingang
- 19a: erstes Steuergerät
- 19b: zweites Steuergerät
- 20a: Leitung
- 20b: Leitung
- 21a: erste Spannungsquelle
- 21 b: zweite Spannungsquelle
- 22: Bremspedal
- 22a: Bremsanforderungssignaleingang
- 22b: Bremsanforderungssignaleingang
- 23a: Anschluss
- 23b: Anschluss
- 24: Verbindung
- 25: Eingangs-/Ausgangsanschluss
- 26: Leitung
- 27: Leitung
- 28: vierter Anschluss
- 29: erster Anschluss
- 30: dritter Anschluss
- 31: Anhängerbremsaktuator
- 32: zweiter Anschluss
- 33: Leitung
- 34: Leitung
- 35: Leitung
- 36: Druckluftvorrat
- 37: Steuereinheit
- 38: Drucksensor
- 39: Eingangsanschluss
- 40: erster Ausgangsanschluss
- 41: zweiter Ausgangsanschluss
- 42: dritter Ausgangsanschluss
- 43: Elektromagnet
- 44: Leitung
- 45: Leitung
- 46: Leitung
- 47: Einlassventil
- 48: Auslassventil
- 49: drittes Ventil
- 50: Leitung
- 51: Leitung
- 52: Relaisventil
- 53: Anschluss
- 54: Anschluss
- 55: Steueranschluss
- 56: Leitung
- 57: Ausgangsanschluss
- 58: Leitung
- 59: Eingangsanschluss
- 60: Ausgangsanschluss
- 61: Eingangsanschluss
- 62: Ausgangsanschluss
- 63: Leitung
- 64: erster Anschluss
- 65: zweiter Anschluss

## Patentansprüche

1. Druckmittelbetätigtes Bremssystem, welches mindestens einen ersten Bremssteuerkreis (15a) und einen zweiten Bremssteuerkreis (15b) umfasst sowie mindestens zwei Bremskrafterzeugungseinrichtungen (4, 4'), von welchen jede von einem Bremsaktuator (5, 5') mit geregeltem Bremsdruck versorgt wird, der wenigstens folgendes beinhaltet:
a) einen ersten Anschluss (7, 7') zum Einsteuem von Steuersignalen,
b) einen zweiten Anschluss (8, 8') zum Einsteuem von Druckmittel als Steuerdruck,
c) einen dritten, mit der zugeordneten Bremskrafterzeugungseinrichtung (4, 4') in Verbindung stehenden Anschluss (9, 9') zum Aussteuern von geregeltem Bremsdruck,
**dadurch gekennzeichnet, dass**
d) der zweite Anschluss (8) des einen Bremsaktuators (5), welcher über seinen ersten Anschluss (7) vom ersten Bremssteuerkreis (15a) angesteuert wird, zum Aussteuern von geregeltem Bremsdruck aus dem anderen Bremsaktuator (5') als Steuerdruck in den einen Bremsaktuator (5) an den dritten Anschluss (9') des anderen Bremsaktuators (5') angeschlossen ist, welcher über seinen ersten Anschluss (7') vom zweiten Bremssteuerkreis (15b) angesteuert wird.

2. Druckmittelbetätigtes Bremssystem nach Anspruch 1, **dadurch gekennzeichnet, dass** zusätzlich der zweite Anschluss (8') des anderen Bremsaktuators (5'), welcher über seinen ersten Anschluss (7') vom zweiten Bremssteuerkreis (15b) angesteuert wird, zum Aussteuern von geregeltem Bremsdruck aus dem einen Bremsaktuator (5) in den anderen Bremsaktuator (5') an den dritten Anschluss (9) des einen Bremsaktuators (5) angeschlossen ist, welcher über seinen ersten Anschluss (7) vom ersten Bremssteuerkreis (15a) angesteuert wird.

3. Druckmittelbetätigtes Bremssystem nach Anspruch 1 oder 2, **dadurch gekennzeichnet, dass** wenigstens ein Bremsaktuator (5, 5') einen vierten Anschluss (10, 10') aufweist, welcher mit einem Druckmittelvorrat (14, 14') in Verbindung steht

4. Druckmittelbetätigtes Bremssystem nach Anspruch 3, **dadurch gekennzeichnet, dass** wenigstens zwei Bremsaktuatoren (5, 5') mit ihren vierten Anschlüssen (10, 10') an denselben Druckmittelvorrat (14) angeschlossen sind.

5. Druckmittelbetätigtes Bremssystem nach wenigstens einem der vorhergehenden Ansprüche, **dadurch gekennzeichnet, dass** der erste Anschluss (7, 7') ein elektrischer Anschluss zum Einsteuem von elektrischen Signalen und der erste und der zweite Bremssteuerkreis (15a, 15b) jeweils ein elektrischer Bremssteuerkreis ist.

6. Druckmittelbetätigtes Bremssystem nach wenigstens einem der vorhergehenden Ansprüche, **dadurch gekennzeichnet, dass** der zweite Anschluss (8) des einen Bremsaktuators (5) durch eine Leitung (12) mit dem zweiten Anschluss (8') oder mit dem dritten Anschluss (9') des anderen Bremsaktuators (5') verbunden ist.

7. Druckmittelbetätigtes Bremssystem nach wenigstens einem der vorhergehenden Ansprüche, **dadurch gekennzeichnet, dass** beide Bremsaktuatoren (5, 5') mit ihren dritten Anschlüssen (9, 9') au Bremskraftzeugungseinrichtungen (4, 4') derselben Achse (VA oder HA) angeschlossen sind.

8. Druckmittelbetätigtes Bremssystem nach wenigstens einem der Ansprüche 1 bis 6, **dadurch gekennzeichnet, dass** beide Bremsaktuatoren (5, 5') mit ihren dritten Anschlüssen (9, 9') an Bremskraftzeugungseinrichtungen (4, 4') verschiedener Achsen (VA, HA) angeschlossen sind.

9. Druckmittelbetätigtes Bremssystem nach wenigstens einem der vorhergehenden Ansprüche, **dadurch gekennzeichnet, dass** jeweils zwei Bremsaktuatoren (5, 5', 5", 5"') von zwei Fahrzeugachsen (VA, HA) mit ihren ersten Anschlüsse (7, 7', 7", 7"') an den ersten Bremssteuerkreis (15a) und den zweiten Bremssteuerkreis (15b) diagonal angeschlossen sind.

10. Druckmittelbetätigtes Bremssystem nach wenigstens einem der vorhergehenden Ansprüche, **dadurch gekennzeichnet, dass** der erste Bremssteuerkreis (15a) und der zweite Bremssteuerkreis (15b) jeweils wenigstens ein eigenes elektronisches Steuergerät (19a, 19b) aufweisen, welche zum Informationsaustausch und Überwachung der Funktion der Bremssteuerkreise (15a, 15b) verbunden und ausgebildet sind.

11. Druckmittelbetätigtes Bremssystem nach Anspruch 10, **dadurch gekennzeichnet, dass** die Verbindung zwischen den beiden elektronischen Steuergeräten (19a, 19b) opto-elektrisch oder elektrisch ausgebildet ist.

12. Druckmittelbetätigtes Bremssystem nach Anspruch 10 oder 11, **dadurch gekennzeichnet, dass** die elektronischen Steuergeräte (19a, 19b) des ersten und zweiten Bremssteuerkreises (15a, 15b) Eingangsanschlüsse (22a, 22b) für Bremsanforderungssignale aufweisen, wobei diese Eingangsanschlüsse (22a, 22b) an ein elektronisches Bremspedal (22) angeschlossen sind.

13. Druckmittelbetätigtes Bremssystem nach wenigstens einem der Ansprüche 10 bis 12, **dadurch gekennzeichnet, dass** wenigstens zwei derselben Achse zugeordnete Bremsaktuatoren (5, 5') in einer Baueinheit zusammengefasst sind.

14. Druckmittelbetätigtes Bremssystem nach wenigstens einem der Ansprüche 10 bis 13, **dadurch gekennzeichnet, dass** wenigstens ein Bremsaktuator (5) eine elektro-pneumatische Ventileinrichtung umfasst, mit einer internen elektronischen Steuereinheit (37) mit einem elektrischen Eingangsanschluss, welcher den ersten Anschluss (7) des Bremsaktuators (5) bildet, mit einem Drucksensoreingangsanschluss (39), welcher an den dritten Anschluss (9) des Bremsaktuators (5) angeschlossen ist, mit einem ersten elektrischen Ausgangsanschluss (40), welcher an einen Elektromagneten (43) eines ersten elektro-pneumatischen Ventils (47) angeschlossen ist, mit einem zweiten elektrischen Ausgangsanschluss (41), welcher an einen Elektromagneten (43) eines zweiten elektro-pneumatischen Ventils (48) angeschossen ist, sowie mit einem dritten elektrischen Ausgangsanschluss (42), welcher an einen Elektromangenten (43) eines dritten elektropneumatischen Ventils (49) angeschlossen ist, wobei eine Verbindung (50, 51) zwischen dem dritten Anschluss (9) und dem vierten Anschluss (10) des Bremsaktuators (5) ein Relaisventil (52) beinhaltet, dessen Steueranschluss (55) an das erste elektro-pneumatische Ventil (47) und an das zweite elektro-pneumatische Ventil (48) angeschlossen ist und dessen Ausgangsanschluss (57) mit einer Entlüftung (11) in Verbindung steht, und wobei ein Eingangsanschluss (59) des ersten elektro-pneumatischen Ventils (47) mit dem vierten Anschluss (10) des Bremsaktuators (5) gekoppelt ist, ein Eingangsanschluss (61) des zweiten elektro-pneumatischen Ventils (48) an einen Ausgangsanschluss (60) des ersten elektropneumatischen Ventils (47) und ein Ausgangsanschluss (62) des zweiten elektropneumatischen Ventils (48) an die Entlüftung (11) angeschlossen ist, und wobei an den zweiten Anschluss (8) des Bremsaktuators (5) ein erster Anschluss (64) des dritten elektropneumatischen Ventils (49) angeschlossen ist, dessen zweiter Anschluss (65) mit dem Ausgangsanschluss (60) des ersten elektropneumatischen Ventils (47) und mit dem Steueranschluss (55) des Relaisventils (52) gekoppelt ist.

15. Druckmittelbetätigtes Bremssystem nach wenigstens einem der Ansprüche 10 bis 13, **dadurch gekennzeichnet, dass** wenigstens ein Bremsaktuator (5) eine elektro-pneumatische Ventileinrichtung umfasst, mit einer internen elektronischen Steuereinheit (37) mit einem elektrischen Eingangsanschluss, welcher den ersten Anschluss (7) des Bremsaktuators (5) bildet, mit einem Drucksensoreingangsanschluss (39), welcher an den dritten Anschluss (9) des Bremsaktuators (5) angeschlossen ist, mit einem ersten elektrischen Ausgangsanschluss (40), welcher an einen Elektromagneten (43) eines ersten elektro-pneumatischen Ventils (47) angeschlossen ist, mit einem zweiten elektrischen Ausgangsanschluss (41), welcher an einen Elektromagneten (43) eines zweiten elektro-pneumatischen Ventils (48) angeschlossen ist, wobei eine Verbindung (50, 51) zwischen dem dritten Anschluss (9) und dem vierten Anschluss (10) des Bremsaktuators (5) ein Relaisventil (52) beinhaltet, dessen Steueranschluss (55) an das erste elektropneumatische Ventil (47) und an das zweite elektro-pneumatische Ventil (48) angeschlossen ist und dessen Ausgangsanschluss (57) mit einer Entlüftung (11) in Verbindung steht, und wobei ein Eingangsanschluss (59) des ersten elektro-pneumatischen Ventils (47) mit dem vierten Anschluss (10) des Bremsaktuators (5) gekoppelt ist, ein Eingangsanschluss (61) des zweiten elektro-pneumatischen Ventils (48) an einen Ausgangsanschluss (60) des ersten elektropneumatischen Ventils (47) und ein Ausgangsanschluss (62) des zweiten elektropneumatischen Ventils (48) an die Entlüftung (11) angeschlossen ist.

16. Druckmittelbetätigtes Bremssystem nach Anspruch 14 oder 15, **dadurch gekennzeichnet, dass** das erste elektro-pneumatische Ventil (47), das zweite elektro-pneumatische Ventil (48) und das dritte elektro-pneumatische Ventil (49) 2/2-Wegemagnetventile sind, wobei im bestromten Zustand das erste elektro-pneumatische Ventil (47) und das zweite elektro-pneumatische Ventil (48) durchschalten und das dritte elektropneumatische Ventil (49) sperrt, während im entstromten Zustand das erste elektro-pneumatische Ventil (47) und das zweite elektro-pneumatische Ventil (48) sperren, während das das dritte elektro-pneumatische Ventil (49) durchschaltet.

17. Druckmittelbetätigtes Bremssystem nach wenigstens einem der Ansprüche 10 bis 16, **dadurch gekennzeichnet, dass** bei einer Funktionsstörung eines der Bremssteuerkreise (15a, 15b) ein einem anderen funktionsfähigen Bremssteuerkreis (15a, 15b) zugeordneter Bremsaktuator (5, 5') an seinem ersten Anschluss (7, 7') von dem Bremssteuerkreis (15a, 15b) zugeordneten elektronischen Steuergerät (19a, 19b) derart angesteuert wird, dass dessen drittes elektro-pneumatische Ventil (49) durchschaltet.

18. Druckmittelbetätigtes Bremssystem nach wenigstens einem der vorhergehenden Ansprüche, **dadurch gekennzeichnet, dass** das Druckmittel durch Druckluft gebildet wird.

## Claims

1. Braking system operated by a pressurised medium comprising at least one first brake control circuit (15a) and a second brake control circuit (15b) as well as at least two brake force generator means (4, 4') whereof each is supplied with a controlled braking pressure by a brake actuator (5, 5') including at least the following:
a) a first port (7, 7') for the controlled input of control signals,
b) a second port (8, 8') for the controlled input of a pressurised medium as control pressure,
c) a third port (9, 9') communicating with the associated brake force generating means (4, 4') for the controlled output of a controlled braking pressure,
**characterised in that**
d) said second port (8) of said first brake actuator (5), which is controlled by said first brake control circuit (15a), is connected to said third port (9') of said other brake actuator (5'), which is controlled via said second brake control circuit (15b) by said second brake control circuit (15b), for the controlled output of a controlled braking pressure from said other brake actuator (5') as control pressure into said first brake actuator (5).

2. Braking system operated by a pressurised medium according to Claim 1, **characterised in that** additionally said second port (8') of said other brake actuator (5'), which is controlled via its first port (7') by said second brake control circuit (15b), for the controlled output of a controlled braking pressure from said first brake actuator (5) into said other brake actuator (5'), is connected to the third port (9) of said first brake actuator (5), which is controlled via its first port (7') by said first brake control circuit (15a).

3. Braking system operated by a pressurised medium according to Claim 1 or 2, **characterised in that** at least one brake actuator (5, 5') is provided with a fourth port (10, 10') communicating with a pressurised-medium reservoir (14, 14').

4. Braking system operated by a pressurised medium according to Claim 3, **characterised in that** at least two brake actuators (5, 5") are connected via their fourth ports (10, 10') to the same pressurised-medium reservoir (14).

5. Braking system operated by a pressurised medium according to any of the preceding claims, **characterised in that** said first port (7, 7") is an electrical connector for the controlled input of electric signals whilst either of said first and second brake control circuits (15a, 15b) is an electric brake control circuit.

6. Braking system operated by a pressurised medium according to at least one of the preceding Claims, **characterised in that** said second port (8) of said first brake actuator (5) is connected by a line (12) to said second port (8') or to a third port (9') of said other brake actuator (5').

7. Braking system operated by a pressurised medium according to at least one of the preceding Claims, **characterised in that** both brake actuators (5, 5') are connected by their third ports (9, 9') to brake force generator means (4, 4') on the same axle (front axle VA or rear axle HA).

8. Braking system operated by a pressurised medium according to at least one of the preceding Claims, **characterised in that** both brake actuators (5, 5') are connected by their third ports (9, 9') to brake force generator means (4, 4') on different axles (front axle VA, rear axle HA).

9. Braking system according to at least one of the preceding Claims, **characterised in that** two respective brake actuators (5, 5', 5", 5"') are diagonally connected by their first port (7, 7', 7", 7'") to said first brake control circuit (15a) and said second brake control circuit (15b).

10. Braking system operated by a pressurised medium according to at least one of the preceding Claims, **characterised in that** said first brake control circuit (15a) and said second brake control circuit (15b) comprise each at least one separate electronic controller (19a, 19b) which controllers are connected and configured for information exchange and for monitoring the function of said brake control circuits (15a, 15b).

11. Braking system operated by a pressurised medium according to Claim 10, **characterised in that** the connection between said two electronic controllers (19a, 19b) is of an opto-electrical or electrical configuration.

12. Braking system operated by a pressurised medium according to Claim 10 or 11, **characterised in that** said electronic controllers (19a, 19b) of said first and second brake control circuits are provided with input ports (22a, 22b) for brake demand signals, with these input ports (22a, 22b) being connected to an electronic brake pedal (22).

13. Braking system operated by a pressurised medium according to at least one of the Claims 10 to 12, **characterised in that** at least two brake actuators (5, 5') associated with the same axle are combined in a single modular unit.

14. Braking system operated by a pressurised medium according to at least one of the Claims 10 to 13, **characterised in that** at least one brake actuator (5) comprises an electro-pneumatic valve means with an internal electronic controller (37) having an electrical input port constituting the first port (7) of said brake actuator (5), with a pressure sensor input port (39) connected to said third port (9) of said brake actuator (5), with a first electrical output port (40) connected to an electromagnet (43) of a first electro-pneumatic valve (47), with a second electrical output port (41) connected to an electromagnet (43) of a second electro-pneumatic valve (48), as well as with a third electrical output port (42) connected to an electromagnet (43) of a third electro-pneumatic valve (49), with a communication line (50, 51) between said third port (9) and said fourth port (10) of said brake actuator (5) including a relay valve (52) having a control port (55) that is connected to said first electro-pneumatic valve (48) and having an output port (57) communicating with a venting means (11), with an input port (59) of said first electro-pneumatic valve (47) being coupled to said fourth port (10) of said brake actuator (5), with an input port (61) of said second electro-pneumatic valve (48) being coupled to an output port (60) of said first electro-pneumatic valve (47) and with an output port (62) of said second electro-pneumatic valve (48) being coupled to said venting means (11), wherein a first port (64) of said third electro-pneumatic valve (49) is connected to said second port (8) of said brake actuator (5) and has a second port (65) that is coupled to the output port (60) of said first electro-pneumatic valve (47) and to said control port (55) of said relay valve (52).

15. Braking system operated by a pressurised medium according to at least one of the Claims 10 to 13, **characterised in that** at least one brake actuator (5) includes an electro-pneumatic valve means, with an internal electronic controller (37) having an electrical input port that constitutes said first port (7) of said brake actuator (5), with a pressure sensor input port (39) that is connected to said third port (9) of said brake actuator (5), with a first electrical output port (40) that is connected to an electromagnet (43) of a first electro-pneumatic valve (47), with a second electrical output port (41) that is connected to an electromagnet (43) of a second electro-pneumatic valve (48), with a connection (50, 51) between said third port (9) and said fourth port (10) of said brake actuator (5) including a relay valve (52) having a control port (55) that is connected to said first electro-pneumatic valve (47) and to said second electro-pneumatic valve (48) and having an output port (57) communicating with a venting means (11), and wherein an input port (59) communicates with a venting means (11) and wherein an input port (59) of said first electro-pneumatic valve (47) is coupled to said fourth port (10) of said brake actuator (5), with an input port (61) of said second electro-pneumatic valve (48) being connected to an output port (60) of said first electro-pneumatic valve (47) and with an output port (62) of said second electro-pneumatic valve (48) being connected to said venting means (11).

16. Braking system operated by a pressurised medium according to Claim 14 or 15, **characterised in that** said first electro-pneumatic valve (47), said second electro-pneumatic valve (48) and said third electro-pneumatic valve (49) are solenoid-operated 2/2-way valves, with said first electro-pneumatic valve (47) and said second electro-pneumatic valve (48) connecting through in the activated state whilst said third electro-pneumatic valve (40) is shutting off, whereas, in the deactivated state, said first electro-pneumatic valve (47) and said second electro-pneumatic valve (48) are shutting off whilst said third electro-pneumatic valve (49) is connecting through.

17. Braking system operated by a pressurised medium according to at least one of the Claims 10 to 16, **characterised in that** in the event of functional trouble of one of said brake control circuits (15a, 15b), a brake actuator (5, 5') associated to another operative brake control circuit (15a, 15b) is controlled on its first port (7, 7') by an electronic controller (19a, 19b) associated with said brake control circuit (15a, 15b) in such a way that said third electro-pneumatic valve (49) of said brake actuator is through-connecting.

18. Braking system operated by a pressurised medium according to at least one of the preceding Claims, **characterised in that** said pressurised medium consists of compressed air.

## Revendications

1. Système de freinage commandé par un milieu sous pression, comprenant au moins un premier circuit de commande de freinage (15a) et un deuxième circuit de commande de freinage (15b) ainsi qu'au moins deux moyens de génération d'effort de freinage (4, 4'), dont chacun est alimenté en une pression de freinage réglée par un acteur de frein (5, 5') renfermant au moins les moyens suivants :
a) une première connexion (7, 7') pour l'entrée réglée des signaux de commande,
b) une deuxième connexion (8, 8') pour l'entrée réglée d'un milieu sous pression en tant que pression de commande,
c) une troisième connexion (9, 9') en communication avec le moyen de génération d'effort de freinage y affecté (4, 4') pour la sortie asservie d'une pression de freinage réglée,
**caractérisé en ce**
d) **que** ladite deuxième connexion (8) dudit premier acteur de frein (5), qui est commandé par ledit premier circuit de commande de freinage (15a), est reliée à ladite troisième connexion (9') dudit autre acteur de frein (5'), qui est commandé via ledit deuxième circuit de commande de freinage (15b) par ledit deuxième circuit de commande de freinage (15b), pour la sortie asservie d'une pression de freinage réglée à partir dudit autre acteur de frein (5') en tant que pression de commande dans ledit premier acteur de frein (5).

2. Système de freinage commandé par un milieu sous pression selon la revendication 1, **caractérisé en ce qu'**au plus ladite deuxième connexion (8') dudit autre acteur de frein (5'), qui est commandé via sa première connexion (7') par ledit deuxième circuit de commande de freinage (15b), pour la sortie asservie d'une pression de freinage réglée à partir dudit premier acteur de frein (5) dans ledit autre acteur de frein (5'), est reliée à la troisième connexion (9) dudit premier acteur de frein (5), qui est commandé via sa première connexion (7') par ledit premier circuit de commande de freinage (15a).

3. Système de freinage commandé par un milieu sous pression selon la revendication 1 ou 2, **caractérisé en ce qu'**au moins un acteur de frein (5, 5') est muni d'une quatrième connexion (10, 10') en communication avec un réservoir de milieu sous pression (14, 14').

4. Système de freinage commandé par un milieu sous pression selon la revendication 3, **caractérisé en ce qu'**au moins deux acteurs de frein (5, 5") sont reliés via leurs quatrièmes connexions (10, 10') au même réservoir de milieu sous pression (14).

5. Système de freinage commandé par un milieu sous pression selon une quelconque des revendications précédentes, **caractérisé en ce que** ladite première connexion (7, 7") est un raccord électrique pour l'entrée asservie des signaux électriques, pendant que chacun desdits premier et deuxième circuits de commande de freinages (15a, 15b) est un circuit de commande de freinage électrique.

6. Système de freinage commandé par un milieu sous pression selon au moins une quelconque des revendications précédentes, **caractérisé en ce que** ladite deuxième connexion (8) dudit premier acteur de frein (5) est raccordée par une ligne (12) à ladite deuxième connexion (8') ou à une troisième connexion (9') dudit autre acteur de frein (5').

7. Système de freinage commandé par un milieu sous pression selon au moins une quelconque des revendications précédentes, **caractérisé en ce que** les deux acteurs de frein (5, 5') sont raccordés par leurs troisièmes connexions (9, 9') à des moyens de génération d'effort de freinage (4, 4') au même essieu (essieu avant VA ou essieu arrière HA).

8. Système de freinage commandé par un milieu sous pression selon au moins une quelconque des revendications précédentes, **caractérisé en ce que** les deux acteurs de frein (5, 5') sont raccordés par leurs troisièmes connexions (9, 9') à des moyens de génération d'effort de freinage (4, 4') aux essieux différents (essieu avant VA, essieu arrière HA).

9. Système de freinage selon au moins une quelconque des revendications précédentes, **caractérisé en ce que** deux acteurs de frein (5, 5', 5", 5"') respectifs sont raccordés en diagonale par leur première connexion (7, 7', 7", 7"') audit premier circuit de commande de freinage (15a) et audit deuxième circuit de commande de freinage (15b).

10. Système de freinage commandé par un milieu sous pression selon au moins une quelconque des revendications précédentes, **caractérisé en ce que** ledit premier circuit de commande de freinage (15a) et ledit deuxième circuit de commande de freinage (15b) comprennent, chacun, au moins une unité de commande électronique (19a, 19b) propre, auxdites unités de commande étant reliées et configurées pour l'échange des informations et pour le monitorage du fonctionnement desdits circuits de commande freinage (15a, 15b).

11. Système de freinage commandé par un milieu sous pression selon la revendication 10, **caractérisé en ce que** la connexion entre lesdites deux unités de commande électroniques (19a, 19b) présente une configuration optoélectrique ou électrique.

12. Système de freinage commandé par un milieu sous pression selon la revendication 10 ou 11, **caractérisé en ce que** lesdites unités de commande électroniques (19a, 19b) dudit premier et deuxième circuits de commande de freinage sont munies des connexions d'entrée (22a, 22b) pour des signaux de demande freinage, auxdites connexions d'entrée (22a, 22b) étant reliées à un pédale de freinage électronique (22).

13. Système de freinage commandé par un milieu sous pression selon au moins une des revendications 10 à 12, **caractérisé en ce qu'**au moins deux acteurs de frein (5, 5') affectés au même essieu sont combinés dans une seule unité modulaire.

14. Système de freinage commandé par un milieu sous pression selon au moins une des revendications 10 à 13, **caractérisé en ce qu'**au moins un acteur de frein (5) comprend un moyen à soupape électropneumatique à une unité de commande électronique interne (37), qui a une connexion d'entrée électrique, qui constitue la première connexion (7) dudit acteur de frein (5), à une connexion d'entrée de détecteur de pression (39), qui est reliée à ladite troisième connexion (9) dudit acteur de frein (5), à une première connexion de sortie électrique (40) reliée à un électroaimant (43) d'une première soupape électropneumatique (47), à une deuxième connexion de sortie électrique (41) reliée à un électroaimant (43) d'une deuxième soupape électropneumatique (48), ainsi qu'à une troisième connexion de sortie électrique (42) reliée à un électroaimant (43) d'une troisième soupape électropneumatique (49), à une ligne de communication (50, 51) entre ladite troisième connexion (9) et ladite quatrième connexion (10) dudit acteur de frein (5), qui renferme une soupape à relais (52) ayant une connexion de commande (55), qui est reliée à ladite première soupape électropneumatique (48) et ayant une connexion de sortie (57) en communication avec un moyen de purge de l'air (11), à une connexion d'entrée (59) de ladite première soupape électropneumatique (47) étant jumelée à ladite quatrième connexion (10) dudit acteur de frein (5), à une connexion d'entrée (61) de ladite deuxième soupape électropneumatique (48) étant jumelée à une connexion de sortie (60) de ladite première soupape électropneumatique (47) et à une connexion de sortie (62) de ladite deuxième soupape électropneumatique (48) étant jumelée audit moyen de purge de l'air (11), dans lequel une première connexion (64) de ladite troisième soupape électropneumatique (49) est reliée à ladite deuxième connexion (8) dudit acteur de frein (5) et est munie d'une deuxième connexion (65), qui est jumelée à la connexion de sortie (60) de ladite première soupape électropneumatique (47) et à ladite connexion de commande (55) de ladite soupape de relais (52).

15. Système de freinage commandé par un milieu sous pression selon au moins une quelconque des revendications 10 à 13, **caractérisé en ce qu'**au moins un acteur de frein (5) comprend un moyen à soupape électropneumatique, à une unité de commande électronique (37) interne ayant une connexion d'entrée électrique, qui constitue ladite première connexion (7) dudit acteur de frein (5), à une connexion d'entrée de détecteur de pression (39), qui est reliée à ladite troisième connexion (9) dudit acteur de frein (5), à une première connexion de sortie (40) électrique, qui est reliée à un électroaimant (43) d'une première soupape électropneumatique (47), à une deuxième connexion de sortie électrique (41), qui est reliée à un électroaimant (43) d'une deuxième soupape électropneumatique (48), à une connexion (50, 51) entre ladite troisième connexion (9) et ladite quatrième connexion (10) dudit acteur de frein (5), qui renferme une soupape de relais (52) ayant une connexion de commande (55), qui est raccordée à ladite première soupape électropneumatique (47) et à ladite deuxième soupape électropneumatique (48) et ayant une connexion de sortie (57) en communication avec un moyen de purge de l'air (11), et dans lequel une connexion d'entrée (59) se trouve en communication avec un moyen de purge de l'air (11) et dans lequel une connexion d'entrée (59) de ladite première soupape électropneumatique (47) est jumelée à ladite quatrième connexion (10) dudit acteur de frein (5), à une connexion d'entrée (61) de ladite deuxième soupape électropneumatique (48) étant reliée à une connexion de sortie (60) de ladite première soupape électropneumatique (47) et à une connexion de sortie (62) de ladite deuxième soupape électropneumatique (48) étant reliée audit moyen de purge de l'air (11).

16. Système de freinage commandé par un milieu sous pression selon la revendication 14 ou 15, **caractérisé en ce que** ladite première soupape électropneumatique (47), ladite deuxième soupape électropneumatique (48) et ladite troisième soupape électropneumatique (49) sont des vannes magnétiques à 2/2 voies, à ladite première soupape électropneumatique (47) et ladite deuxième soupape électropneumatique (48) se trouvant en en condition de mise en communication en état activé, pendant que ladite troisième soupape électropneumatique (40) se trouve en condition d'inhibition, en état désactivé, à ladite première soupape électropneumatique (47) et ladite deuxième soupape électropneumatique (48) se trouvant en condition d'inhibition, pendant que ladite troisième soupape électropneumatique (49) se trouve en condition de mise en communication.

17. Système de freinage commandé par un milieu sous pression selon au moins une quelconque des revendications 10 à 16, **caractérisé en ce qu'**au cas de défaillance d'un desdits circuits de commande de freinage (15a, 15b), un acteur de frein (5, 5') affecté à un autre circuit de commande de freinage fonctionnel (15a, 15b) est commandé à sa première connexion (7, 7') par une unité de commande électronique (19a, 19b) affectée audit circuit de commande de freinage (15a, 15b) d'une telle façon, que ladite troisième soupape électropneumatique in (49) dudit acteur de frein se trouve en condition de mise en communication.

18. Système de freinage commandé par un milieu sous pression selon au moins une quelconque des revendications précédentes, **caractérisé en ce que** ledit milieu sous pression consiste en air comprimé.
